# EUROPEAN PATENT SPECIFICATION

(11) **EP 3 517 314 B1**
(45) Date of publication and mention of the grant of the patent: **25.11.2020**
(21) Application number: 19151751.5
(22) Date of filing: 15.01.2019
(51) Int. Cl.: B60B 3/04, B60B 3/10

(54) **A METHOD FOR MANUFACTURING A HYBRID VEHICLE WHEEL**
HERSTELLUNGSVERFAHREN EINES HYBRIDEN FAHRZEUGSRADES
METHODE DE PRODUCTION D'UNE ROUE HYBRIDE POUR VEHICULE

(30) Priority: 16.01.2018 IT 201800001028
(43) Date of publication of application: 31.07.2019
(73) Proprietor: MW Italia S.r.l., 10098 Rivoli (TO) (IT)
(72) Inventor: GALLIO, Giorgio, I-10126 TORINO (IT); PERRIS MAGNETTO, Gabriele, I-10098 RIVOLI (Torino) (IT)
(74) Representative: Vanzini, Christian

(56) References cited:
- EP-A2- 0 028 393
- WO-A1-03/037651
- WO-A1-2010/018531
- CH-A5- 658 224
- US-A1- 2010 052 413
- US-B1- 6 533 362

## Description

The present invention refers to a method for manufacturing a motor vehicle wheel comprising a sheet metal rim and an aluminum disc.

CH 658 224 A5 and US 2010/052413 A1 disclose wheel manufacturing methods in which the rim is secured to the disc by upsetting a flange of the rim over an edge of the disc. WO 03/037651 A1 discloses a wheel manufacturing method in which the rim is secured to the disc by means of rivets.

More specifically, the present invention concerns a method for manufacturing a wheel for vehicles, comprising the following steps:
providing a sheet metal rim, comprising on its axially outer side an outer flange, an outer bead seat and a retaining hump, through which the outer bead seat is connected to a rim well,
providing an aluminum alloy disc, comprising a cover part and a connection part protruding axially from the cover part and having an end provided with an undercut,
applying a structural adhesive to areas of at least one of said disc and rim intended to come in contact with corresponding areas of the other of said at least one disc and rim, and
mounting the disc to the rim by press-fitting the connection part of the disc within the rim, so that the cover part abuts against the axially outer side of the rim and the undercut is within the concave inner side of the retaining hump, said undercut extending radially outward past a radially more inward area of the outer bead seat.

Preferred embodiments of the invention are defined in the dependent claims, which are intended as an integral part of the present description.

Due to the invention, it is possible to make a wheel which, in use, has the same appearance as an aluminum alloy wheel, but is less expensive.

Features and advantages of the wheel according to the invention will become more apparent in the following detailed description of some embodiments of the invention, made with reference to the accompanying drawings, provided purely to be illustrative and non-limiting, wherein:

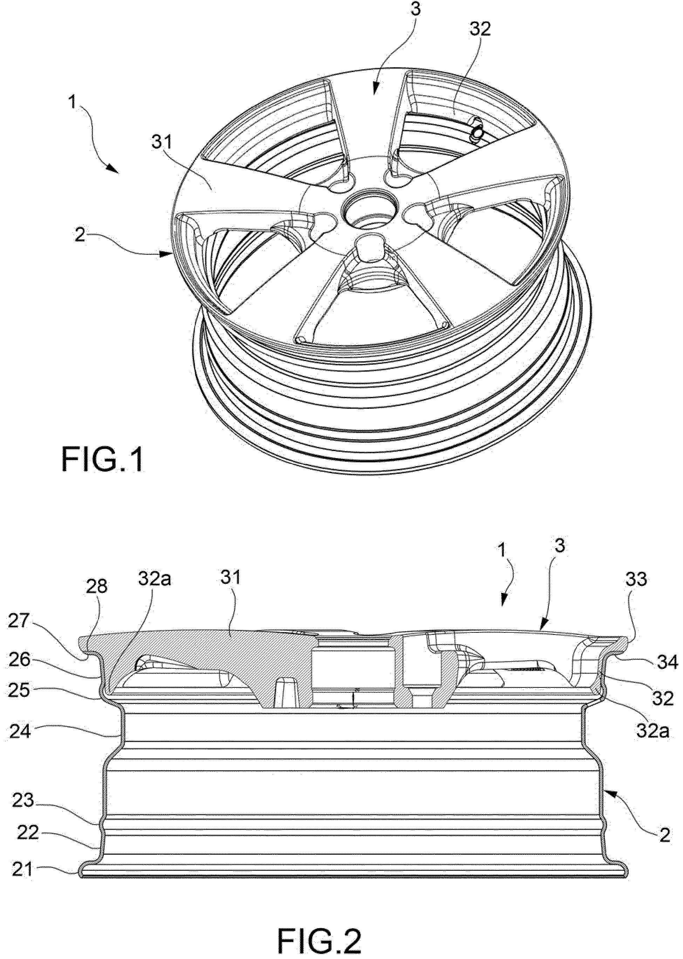

- figure 1 is a perspective view of a wheel according to the invention;
- figure 2 is a cross-sectional view of the wheel of figure 1; and
- figures 3 and 4 are views in magnified scale of respective areas of connection between the disk and rim.

In the following description, "axial direction" means a direction parallel to the wheel axis. The indications "inward" and "outward", relative to the axial direction, refer to the condition of installation of the wheel on the vehicle, where "inward" means "toward the vehicle" and "outward" means "away from the vehicle".

In the drawings, a wheel for vehicles according to the invention is indicated collectively at 1.

The wheel 1 comprises a rim 2 made of sheet metal, e.g. steel or aluminum and made for example by rolling and welding, and a disc 3 made of aluminum alloy, e.g. made by casting.

The rim 2 comprises, in succession along the axial direction from the inside to the outside and connected to each other, an inner flange 21, an inner bead seat 22, an inner retaining hump 23, a rim well 24, an outer retaining hump 25, an outer bead seat 26 and an outer flange 27. The outer flange 27 is configured to have a support surface 28 facing outward axially.

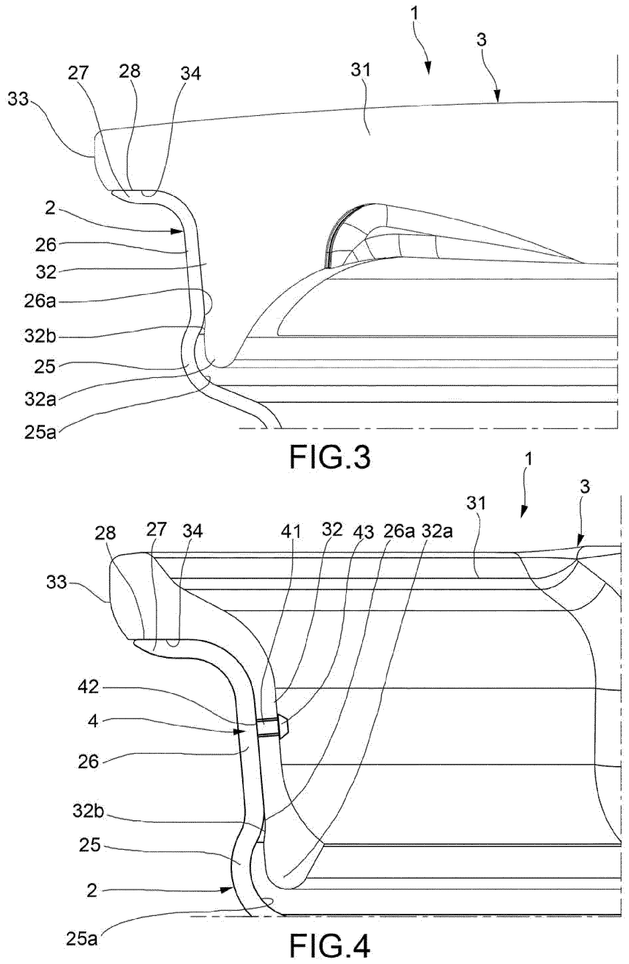

The retaining humps 23 and 25 are conventionally provided to maintain the respective tire beads even when the tire pressure is zero. Each hump has conventionally a radially concave inner side. In figures 3 and 4, 25a indicates in particular the radially inner side of the outer retaining hump 25.

The disc 3 is preferably of the spoked type and comprises a central portion for connection to an axle hub (not shown), from which a plurality of angularly spaced spokes extends outward. The radially outer ends of the spokes are interconnected by a peripheral connecting ring which extends concentrically with the axis of the wheel 1. The connecting ring is applied and attached to an inner annular surface of the rim 2. According to other embodiments, the disc could be of a different type, for example, a disc provided with a central connection portion, substantially continuous, and provided with small peripheral windows.

In general, in the disc 3, a cover part 31 may be defined, arranged on the axially outer side of the rim 2, which in the illustrated example is formed by the central part of the disc, by the spokes and by the peripheral ring that interconnects the spokes, and a peripheral connection part 32 protruding axially inward from the cover part 31 and inserted coaxially inside the rim 2, and which in the illustrated example is formed by an annular protrusion that extends from the peripheral ring of the disc.

Between a radially outer edge 33 of the cover part 31 and the peripheral connection part 32, a shoulder 34 is defined, resting against the support surface 28 of the rim 2.

Reference is now made to figures 3 and 4, which represent respectively a cross-section taken at one spoke of the disc, and a cross-section taken at one window between two spokes.

The connection part 32 of the disc 3 has an axially inner end 32a provided with an undercut 32b inserted within the concave inner side 25a of the outer retaining hump 25. The undercut 32b extends radially outward beyond a radially more inward area 26a of the outer bead seat 26. For the rest, the radially outer profile of the connection part 32 and the shoulder 34 of the disc 3 matches the radially inner profile of the outer bead seat 26 and the outer flange 27 of the rim 2. In this way, it is possible to make a mechanical joint between the disc and the rim by press-fitting. In other words, the disc is mounted axially on the rim by press-fitting the connection part of the disc inside the rim, so that the cover part abuts against the axially outer side of the rim and the undercut reaches within the concave inner side of the retaining hump, axially beyond an area radially more inward than the outer bead seat, which is placed at a smaller radius than that of the undercut. In addition, a structural adhesive is provided applied in areas of contact between the disc and the rim to have an additional fastening means therebetween.

As may be seen in figures 3 and 4, the radially outer edge 33 of the cover part 32 of the disc 3 converges with the outer flange 27 of the rim 2 to define an outer flange profile of the wheel. In other words, the radially outer profile 33 of the cover part 32 of the disc is a continuation of the profile of the outer flange 27 of the rim 2.

Preferably, the rim 2 and the disc 3 are also fastened to each other by means of an additional fastening member, indicated at 4 in figure 4. Such fastening member 4 comprises a stem 41 arranged through a hole in the connection part 32 of the disc 3 and having one end 42 welded to the sheet metal of the rim 2, and a head 43 abutting against the connection part 32 of the disc 3 around the hole, on the side opposite to the welded end 42.

## Claims

1. Method for manufacturing a vehicle wheel, comprising the following steps:
providing a rim (2) made of sheet metal, comprising on its axially outer side an outer flange (27), an outer bead seat (26) and a retaining hump (25), through which the outer bead seat (26) is connected to a rim well (24),
providing a disc (3) made of aluminum alloy, comprising a cover part (31) and a connection part (32) protruding axially from the cover part (31) and having an end (32a) provided with an undercut (32b),
applying a structural adhesive to areas of at least one of said disc and rim intended to come in contact with corresponding areas of the other of said disc and rim, and
mounting the disc (3) to the rim (2) by interference press-fitting the connection part (32) of the disc (3) within the rim (2), in such a way that the cover part (31) abuts against an axially outer side of the rim (2) and the undercut (32b) goes within the concave inner side (25a) of the retaining hump (25), said undercut radially extending outwardly past a radially more inward area (26a) of the outer bead seat (26).

2. Method according to claim 1, wherein the rim (2) and the disc (3) are further fastened to each other by means of an additional fastening member (4), said fastening member comprising a stem (41) arranged through a hole of the connection part (32) of the disc (3) and having an end (42) welded to the sheet metal of the rim (2), and a head (43) abutting against the connection part (32) of the disc (3) around said hole, on the side opposite to the welded end (42).

3. Method according to any of the preceding claims, wherein the cover part (31) of the disc (3) comprises a radially outer edge (33) cooperating with the outer flange (27) of the rim (2) to define an outer flange profile of the wheel.

## Patentansprüche

1. Verfahren zum Herstellen eines Fahrzeugrades, umfassend die folgenden Schritte:
Bereitstellen einer Felge (2) aus Blech, die an ihrer axial äußeren Seite einen äußeren Flansch (27), einen äußeren Wulstsitz bzw. Felgenschulter (26) und einen Rückhaltehöcker (25) umfasst, durch den der äußere Wulstsitz (26) mit einem Felgenbett (24) verbunden ist,
Bereitstellen einer Scheibe (3) aus Aluminiumlegierung, umfassend einen Abdeckungsteil (31) und einen Verbindungsteil (32), der axial von dem Abdeckungsteil (31) hervorsteht und ein Ende (32a) aufweist, das mit einem Hinterschnitt (32b) versehen ist;
Aufbringen eines Strukturklebstoffs auf Bereiche von zumindest einer von Scheibe und Felge, die dazu bestimmt ist, mit entsprechenden Bereichen der anderen von Scheibe und Felge in Kontakt zu kommen, und
Montieren der Scheibe (3) an der Felge (2) durch Presspassen des Verbindungsteils (32) der Scheibe (3) innerhalb der Felge (2) derart, dass der Abdeckungsteil (31) gegen eine axial äußere Seite der Felge (2) anliegt und der Hinterschnitt (32b) innerhalb der konkaven Innenseite (25a) des Rückhaltehöckers (25) verläuft, wobei sich der Hinterschnitt radial nach außen vorbei an einem radial weiter einwärts (26a) befindlichen Bereich des äußeren Wulstsitzes (26) erstreckt.

2. Verfahren nach Anspruch 1, wobei die Felge (2) und die Scheibe (3) ferner mittels eines zusätzlichen Befestigungsglieds (4) miteinander befestigt sind, wobei das Befestigungsglied einen Schaft (41), der durch ein Loch des Verbindungsteils (32) der Scheibe (3) angeordnet ist und ein Ende (42) aufweist, das an das Blech der Felge (2) geschweißt ist, und einen Kopf (43) umfasst, der gegen den Verbindungsteil (32) der Scheibe (3) um das Loch herum auf der dem geschweißten Ende (42) gegenüberliegenden bzw. entgegengesetzten Seite anliegt.

3. Verfahren nach einem der vorhergehenden Ansprüche, wobei der Abdeckungsteil (31) der Scheibe (3) eine radial äußere Kante (33) umfasst, die mit dem äußeren Flansch (27) der Felge (2) zusammenwirkt, um ein äußeres Flanschprofil des Rades zu definieren.

## Revendications

1. Procédé de fabrication d'une roue de véhicule, comprenant les étapes suivantes :
la fourniture d'une jante (2) constituée d'une tôle métallique, comprenant sur son côté axialement externe un rebord externe (27), un repos de talon externe (26) et une bosse de retenue (25), à travers laquelle le repos de talon externe (26) est raccordé à une base de jante (24),
la fourniture d'un disque (3) constitué d'alliage d'aluminium, comprenant une partie de couverture (31) et une partie de raccordement (32) axialement saillante depuis la partie de couverture (31) et ayant une extrémité (32a) munie d'une gorge (32b),
l'application d'un adhésif structurel à des zones d'au moins l'un dudit disque et de ladite jante destinées à entrer en contact avec des zones correspondantes de l'autre dudit disque et de ladite jante, et
le montage du disque (3) sur la jante (2) par emmanchement par interférence de la partie de raccordement (32) du disque (3) au sein de la jante (2), de telle sorte que la partie de couverture (31) bute contre un côté axialement externe de la jante (2) et que la gorge (32b) aille au sein du côté interne concave (25a) de la bosse de retenue (25), ladite gorge s'étendant radialement vers l'extérieur au-delà d'une zone radialement davantage vers l'intérieur (26a) du repos de talon externe (26).

2. Procédé selon la revendication 1, dans lequel la jante (2) et le disque (3) sont en outre assujettis l'un à l'autre au moyen d'un organe d'assujettissement (4) supplémentaire, ledit organe d'assujettissement comprenant une tige (41) agencée à travers un trou de la partie de raccordement (32) du disque (3) et ayant une extrémité (42) soudée à la tôle métallique de la jante (2), et une tête (43) butant contre la partie de raccordement (32) du disque (3) autour dudit trou, sur le côté opposé à l'extrémité soudée (42).

3. Procédé selon l'une quelconque des revendications précédentes, dans lequel la partie de couverture (31) du disque (3) comprend un bord radialement externe (33) coopérant avec le rebord externe (27) de la jante (2) pour définir un profil de rebord externe de la roue.
